# EUROPÄISCHE PATENTANMELDUNG

(11) **EP 1 570 776 A2**
(43) Veröffentlichungstag der Anmeldung: **07.09.2005**
(21) Anmeldenummer: 05002558.4
(22) Anmeldetag: 08.02.2005
(51) Int. Cl.: A47L 5/14

(54) **Saug-/Blasgerät**

(30) Priorität: 02.03.2004 DE 102004009979
(71) Anmelder: Andreas Stihl AG & Co. KG, 71336 Waiblingen (DE)
(72) Erfinder: Häberlein, Jürgen, 71540 Murrhardt (DE)
(74) Vertreter: Wasmuth, Rolf

(57) **Zusammenfassung**

Die Erfindung betrifft ein handgeführtes, tragbares Saug-/Blasgerät mit einem Gebläse (1), mit einem Motor (2) zum Antrieb des Gebläses (1) und mit einem vom Gebläse fortführenden Blasrohr (3). Das Blasrohr (3) mündet im Saugbetrieb des Saug-/Blasgerätes in einen Fangsack (4). Innenseitig des Fangsackes (4) ist eine mit einer elektrischen Masse (5) des Saug-/Blasgerätes elektrisch leitend verbundene Potentialausgleichseinrichtung (6) angeordnet.

## Beschreibung

Die Erfindung betrifft ein Saug-/Blasgerät mit den Merkmalen nach dem Oberbegriff des Anspruchs 1.

Bei handgeführten, tragbaren Saug-/Blasgeräten wird mittels eines motorbetriebenen Gebläses ein Luftstrom erzeugt. Mittels eines beispielsweise saugseitig an das Saug-/Blasgerät angeschlossenen Saugrohres kann Staub, Laub oder dgl. vom Boden aufgesaugt und über ein ausströmseitiges Blasrohr in einen Fangsack geblasen werden.

Es sind auch Ausführungsformen bekannt, bei denen im Blasrohr eine durch den Blasstrom betätigte Unterdruckeinrichtung beispielsweise in Form einer Venturieinrichtung angeordnet ist. Ein Saugrohr mündet dabei in die Venturieinrichtung. Es können Gegenstände durch das Saugrohr und die Venturieinrichtung angesaugt und über das Blasrohr zum Fangsack geleitet werden, ohne das den Luftstrom antreibende Gebläse zu passieren. Derartige Anordnungen werden insbesondere zum Aufsaugen größerer bzw. harter oder empfindlicher Gegenstände, beispielsweise zum Ernten von Nüssen oder dgl. eingesetzt.

Die vorgenannten Saug-/Blasgeräte werden beispielsweise auf dem Rücken getragen und von Hand geführt. Das Gehäuse des Gebläses und insbesondere das Blasrohr sind aus Kunststoff gefertigt, wobei der Kunststoff als elektrischer Isolator gegenüber dem Antriebsmotor wirkt.

Im Blasrohr bildet sich bei entsprechender Gebläseleistung eine relativ hohe Strömungsgeschwindigkeit aus. Diese kann bei entsprechenden atmosphärischen Bedingungen und beim Ansaugen von schmutz- oder staubpartikelbeladener Umgebungsluft insbesondere durch Reibung zwischen den Partikeln und dem Gebläserad, dem Gebläsegehäuse und mit der Blasrohrwand zu elektrostatischen Aufladungen führen. Die im Luftstrom mitgeführten elektrisch geladenen Partikel weisen eine elektrische Potentialdifferenz zu den umgebenden Bauteilen auf. Die Partikel selbst und insbesondere Bauteile des Saug-/Blasgerätes entwickeln ein elektrisches Potential gegeneinander und auch gegenüber der Umgebung. Beim Berühren des Saug-/Blasgerätes und insbesondere des Fangsackes kann es zu einer für die Bedienperson unangenehmen elektrostatischen Entladung kommen.

Der Erfindung liegt die Aufgabe zugrunde, ein Saug-/Blasgerät der eingangs genannten Gattung derart weiterzubilden, daß die Bildung einer elektrostatischen Aufladung vermieden ist.

Es wird ein Saug-/Blasgerät vorgeschlagen, bei dem innenseitig des Fangsackes eine mit einer elektrischen Masse des Saug-/Blasgerätes elektrisch leitend verbundene Potentialausgleichseinrichtung angeordnet ist. Staubpartikel oder andere, im Luftstrom mitgeführte und im Laufe des Strömungsweges elektrisch aufgeladene Partikel führen beim Auftreffen auf die Innenseite des Fangsackes zu dessen elektrostatischer Aufladung. Über die elektrische Kontaktierung der Potentialausgleichseinrichtung des Fangsackes mit der elektrischen Masse wird die entstehende Ladung des Fangsackes zur Masse abgeleitet. Im entsprechenden Maße wird auch die Potentialdifferenz zwischen dem Fangsack und der Umgebung verringert bzw. aufgehoben. Der Fangsack kann ohne weiteres berührt werden, ohne daß es zu einer unangenehmen elektrostatischen Entladung zwischen dem Fangsack und der Bedienperson kommt.

In einer vorteilhaften Weiterbildung ist die Potentialausgleichseinrichtung flexibel ausgebildet. Insbesondere in Verbindung mit einem flexiblen, beispielsweise aus einem Gewebe gebildeten Fangsack kann sich die Form dem Luftstrom bzw. dem Füllgrad des Fangsackes ohne mechanische Überbeanspruchung anpassen. Außerhalb des Betriebes ist der Fangsack einschließlich der Potentialausgleichseinrichtung leicht zusammenlegbar und verstaubar.

Die Potentialausgleichseinrichtung ist zweckmäßig als Anordnung elektrisch leitender, insbesondere metallischer Fäden ausgeführt, wobei der Fangsack vorteilhaft aus einem die elektrisch leitenden Fäden umfassenden Gewebe gefertigt ist. Durch die elektrisch leitenden Fäden läßt sich die Potentialausgleichseinrichtung flächig und flexibel ausbilden. Es kann ein Potentialausgleich an jeder beliebigen Stelle des Fangsackes stattfinden. Die Bildung einzelner, inselartiger Stellen ohne Potentialausgleich ist vermieden. Ein die elektrisch leitenden Fäden umfassendes Gewebe kann in seinen mechanischen und elektrischen Eigenschaften leicht den Erfordernissen angepaßt werden. Es kann ein Faseranteil mit hoher mechanischer Belastbarkeit gewählt werden, der bei einer dünnen und leichtgewichtigen Ausführung des Gewebes für eine hinreichende Tragfähigkeit sorgt. Der für einen zuverlässigen Potentialausgleich erforderliche Gehalt an elektrisch leitenden Fäden kann beliebig eingestellt werden. Insbesondere ist eine Ausbildung des Gewebes bzw. des daraus gefertigten Fangsackes vollständig aus leitenden Fasern möglich.

In einer zweckmäßigen Alternative ist die Potentialausgleichseinrichtung als elektrisch leitende, folienartige Beschichtung des Fangsackes ausgebildet. Es ist eine zuverlässige, flächige Ladungsaufnahme möglich. Gleichzeitig kann die folienartige Beschichtung in erwünschter Weise zur Dichtigkeit des Fangsackes beitragen.

In einer zweckmäßigen Ausbildung ist die elektrische Masse des Saug-/Blasgerätes durch den Motor und insbesondere durch ein Gehäuse des Motors gebildet. Im Zusammenhang mit einer Ausbildung des Saug-/Blasgerätes mit einem Verbrennungsmotor als Antriebsmotor und dem Fehlen eines Massekabels einer elektrischen Stromversorgung ist geräteintern ein zuverlässiger Potentialausgleich sichergestellt, ohne daß eine Ladungsableitung durch ein Netzkabel oder dergleichen erforderlich wäre.

Der Potentialausgleichsleiter verläuft zweckmäßig innenseitig durch einen Ausblaskrümmer des Gebläses, wobei das motornahe Ende des Potentialausgleichsleiters innenseitig des Gebläses im Bereich des Ausblaskrümmers insbesondere mittels einer Motorbefestigungsschraube am Motor festgelegt ist. Es ist auch in diesem Bereich kein Durchbruch durch das Gebläsegehäuse für den Ausgleichsleiter erforderlich. Der Ausgleichsleiter kann auch im Bereich des Ausblaskrümmers zum Potentialausgleich beitragen. Über die bei bekannten Geräten vorhandene, in den Ausblaskrümmer hineinragende Motorbefestigungsschraube ist ohne zusätzlichen Aufwand ein zuverlässiger Masseschluß gegeben.

In einer vorteilhaften Weiterbildung ist die Potentialausgleichseinrichtung des Fangsackes mit einer weiteren Potentialausgleichseinrichtung im Blasrohr elektrisch leitend verbunden. Über die Potentialausgleichseinrichtung im Blasrohr kann bereits während des Strömungsweges die Ausbildung elektrostatischer Aufladungen unterbunden oder zumindest verringert werden. Eventuell sich ausbildende Ladungen können noch im Blasrohr abgeleitet werden, in dessen Folge die sich im Fangsack einstellende Potentialdifferenz verringert ist. Die Potentialausgleichseinrichtung im Fangsack ist entlastet und kann auch bei sehr einfacher Ausführung zuverlässig einen Potentialausgleich eventuell vorhandener Restladungen herbeiführen.

Ausführungsbeispiele der Erfindung sind im folgenden anhand der Zeichnung näher beschrieben. Es zeigen:
- Fig. 1: in einer schematischen Blockdarstellung die wesentlichen Komponenten eines Saug-/Blasgerätes nach dem Stand der Technik;
- Fig. 2: die Anordnung nach Fig. 1 mit einem durch das Blasrohr verlaufenden Potentialausgleichsleiter, der an einer innenseitigen Potentialausgleichseinrichtung eines Fangsackes angeschlossen ist;
- Fig. 3: Einzelheiten des Gebläsegehäuses der Anordnung nach den Fig. 1 und 2;
- Fig. 4: eine Querschnittsdarstellung der Anordnung nach Fig. 3;
- Fig. 5: in schematischer Darstellung ein Gewebe mit elektrisch leitenden Fäden zur Bildung der Potentialausgleichseinrichtung des Fangsackes;
- Fig. 6: eine Variante der Potentialausgleichseinrichtung nach Fig. 5 mit einer elektrisch leitenden Folienbeschichtung.

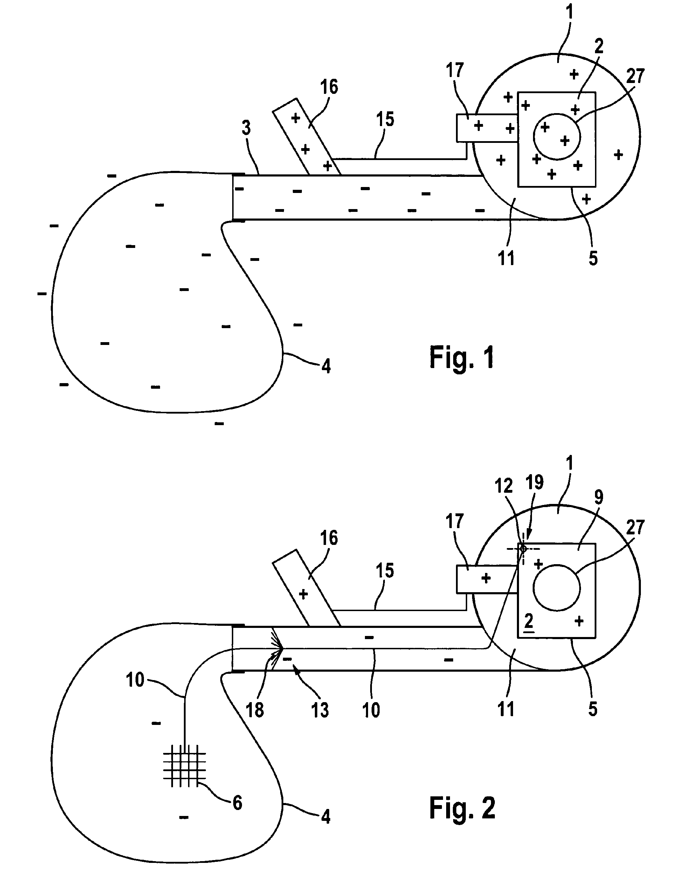

Fig. 1 zeigt in einer schematischen Blockdarstellung die wesentlichen Komponenten eines handgeführten, tragbaren Saug-/Blasgerätes nach dem Stand der Technik. Das Blasgerät weist ein Gebläse 1 auf, welches durch einen Motor 2 angetrieben ist. Der Motor 2 ist im gezeigten Ausführungsbeispiel ein Verbrennungsmotor mit einem angedeuteten Vergaser 17. Es kann auch ein Elektromotor oder dgl. vorgesehen sein. Das Gebläse 1 ist mit einem Ausblaskrümmer 11 versehen, an den sich ein vom Gebläse 1 fortführendes Blasrohr 3 anschließt. Das Blasrohr 3 mündet mit seinem freien Ende in einen Fangsack 4. Durch eine mittige Saugöffnung 27 des Gebläses 1 und ein daran angeschlossenes, nicht näher gezeigtes Saugrohr kann ein Luftstrom angesaugt und über das Blasrohr 3 in den Fangsack 4 geleitet werden.

Außenseitig am Blasrohr 3 ist ein Handgriff 16 mit Bedienelementen für den Motor 2 angebracht. Von den Bedienelementen am Handgriff 16 führt beispielhaft ein Gaszug 15 zum Vergaser 17. Der Gaszug 15 ist elektrisch leitend, wodurch der Handgriff 16 sowie der Motor 2 mit dem Vergaser 17 das gleiche elektrische Potential aufweisen. Durch Reibung der im Luftstrom mitgeführten Partikel untereinander sowie mit den Wänden des Ausblaskrümmers 11 und des Blasrohres 3 entsteht in diesem Bereich eine durch Minus-Zeichen angedeutete negative elektrostatische Ladung der Partikel im Luftstrom. Demgegenüber und auch gegenüber der Umgebung weist der Bereich des Motors 2, des Handgriffes 16 und des Gehäuses vom Gebläse 1 eine durch PlusZeichen angedeutete positive Potentialdifferenz auf. Die negativ geladenen Staubpartikel prallen auf die Innenseite des Fangsackes 4 auf, wodurch auch der Fangsack 4 eine negative, durch Minus-Zeichen angedeutete Ladung bzw. Potentialdifferenz gegenüber der Umgebung erhält. Beim Berühren des Saug-/Blasgerätes und insbesondere des negativ geladenen Fangsackes 4 kann es zu unerwünschten Entladungserscheinungen kommen.

Fig. 2 zeigt die erfindungsgemäße Weiterbildung der Anordnung nach Fig. 1, bei der innenseitig des Blasrohres 3 ein mit dem Motor 2 elektrisch leitend verbundener Potentialausgleichsleiter 10 verläuft. Der Potentialausgleichsleiter 10 verbindet elektrisch leitend eine innenseitige Potentialausgleichseinrichtung 6 des Fangsackes 4 mit einer elektrischen Masse 5 des Saug-/Blasgerätes. Die elektrische Masse 5 ist im gezeigten Ausführungsbeispiel durch ein Gehäuse 9 des Motors 2 gebildet. Es kann dazu auch beispielsweise der Erdungsleiter eines elektrischen Antriebsmotors oder dgl. vorgesehen sein. Der Potentialausgleichsleiter 10 ist im Bereich seines freien Endes 19 mittels einer Motorbefestigungsschraube 12 am Motor 2 elektrisch leitend festgelegt. Innerhalb des Blasrohres 3 ist eine weitere Potentialausgleichseinrichtung 13 vorgesehen, die über den Potentialausgleichsleiter 10 mit der Potentialausgleichseinrichtung 6 des Fangsackes 4 und mit der elektrischen Masse 5 elektrisch leitend verbunden ist. Der Potentialausgleichsleiter 10 ist im gezeigten Ausführungsbeispiel mit radial hervorstehenden Drähten einer elektrisch leitenden Stützspinne 18 mittig im Blasrohr 3 positioniert. Der Potentialausgleichsleiter 10 und die Stützspinne 18 weisen über ihrer gesamten Länge eine blanke, elektrisch leitende Oberfläche auf, über die elektrische Ladungen aufgenommen werden können. Durch die Stützspinne 18 und den blanken Potentialausgleichsleiter 10 ist die weitere Potentialausgleichseinrichtung 13 gebildet.

Bei einem sich im Blasrohr 3 ausbildenden Luftstrom wird die entlang des Blasrohres 3 entstehende elektrostatische Ladung über die gesamte Länge des Potentialausgleichsleiters 10 aufgenommen und über die elektrische Kontaktierung mit dem Motor 2 ausgeglichen. Eine weitere Ladungsaufnahme aus dem Luftstrom erfolgt über die elektrisch leitende Stützspinne 18. Die Stützspinne 18 nimmt dabei elektrostatische Ladungen sowohl aus dem Luftstrom über dessen gesamtem Querschnitt als auch von den Innenwänden des Blasrohres 3 auf. Die verbleibenden elektrischen Ladungen werden gesteuert über den Potentialausgleichsleiter 10 zur elektrischen Masse 5 abgeleitet.

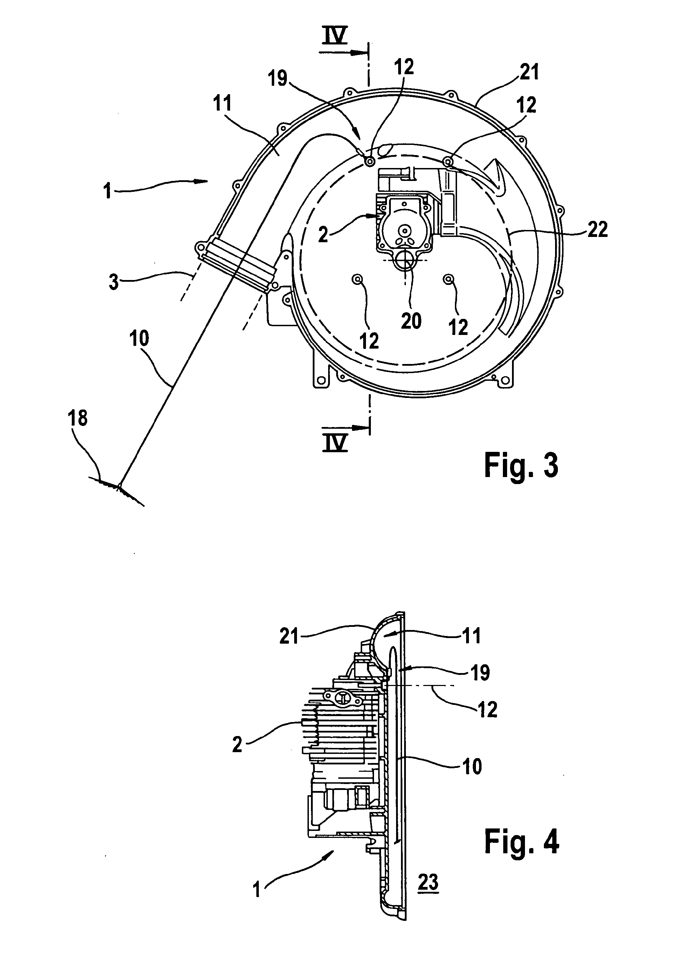

Fig. 3 zeigt in einer Seitenansicht Einzelheiten der Anordnung nach Fig. 2 im Bereich des Gebläses 1. Das Gebläse 1 ist im gezeigten Ausführungsbeispiel als Radialgebläse mit einem spiralförmigen Gebläsegehäuse ausgebildet. Von dem Gebläsegehäuse ist die Innenseite einer Halbschale 21 gezeigt, in der ein angedeutetes Gebläserad 22 um eine Drehachse 20 drehend mittels des Motors 2 antreibbar ist. Das spiralige Gebläsegehäuse geht mittels eines Ausblaskrümmers 11 in das angedeutete Blasrohr 3 über.

Rückseitig der Halbschale 21 ist der Motor 2 angeordnet und mittels die Stirnwand der Halbschale 21 durchgreifender Motorbefestigungsschrauben 12 befestigt. Der Potentialausgleichsleiter 10 verläuft innenseitig durch den Ausblaskrümmer 11 des Gebläses 1 und ist innenseitig des Gebläses 1 im Bereich des Ausblaskrümmers 11 an der entsprechenden, dort angeordneten Motorbefestigungsschraube 12 mit dem Motor 2 elektrisch leitend verbunden.

Fig. 4 zeigt eine Querschnittsdarstellung der Anordnung nach Fig. 3 mit einem Schnittverlauf entsprechend der Linie IV-IV. Der Motor 2 ist außenseitig der Halbschale 21 mittels der Befestigungsschrauben 12 festgelegt, wobei die Befestigungsschrauben 12 durch die Seitenwand der Halbschale 21 hindurchragen.

Auf der dem Motor 2 gegenüberliegenden Innenseite 23 des Gebläsegehäuses bildet sich im Betrieb ein Luftstrom aus, der durch den Ausblaskrümmer 11 und von dort durch das Blasrohr 3 (Fig. 3) verläuft. Der Potentialausgleichsleiter 10 liegt im Bereich seines Endes 19 auf der Innenseite 23 des Gebläses 1 und ist dort im Bereich des Ausblaskrümmers 11 über die Motorbefestigungsschraube 12 mit dem außenseitig liegenden Motor 2 elektrisch leitend verschraubt.

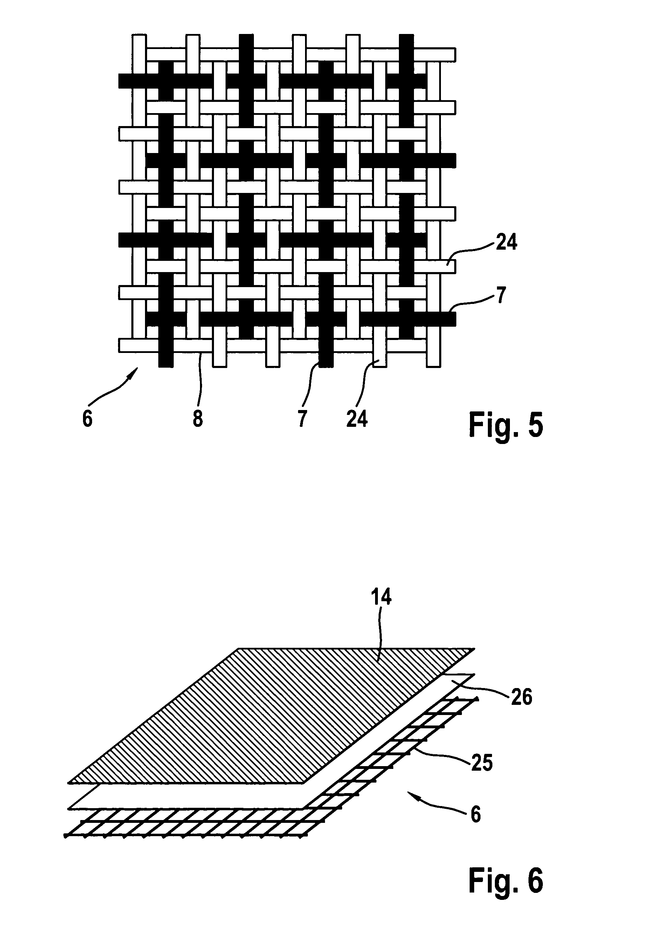

Fig. 5 zeigt in schematischer Darstellung ein Gewebe 8, aus dem der Fangsack 4 (Fig. 2) gefertigt ist, und durch das die Potentialausgleichseinrichtung 6 im Fangsack 4 gebildet ist. Das Gewebe 8 ist im gezeigten Ausführungsbeispiel als Mischgewebe mit tragenden Fäden 24 und elektrisch leitenden Fäden 7 ausgebildet. Die elektrisch leitenden Fäden 7 sind Metallfäden, können aber auch als metallisch beschichtete Fäden, als elektrisch leitende Fäden beispielsweise aus Kohlefaser oder dgl. ausgeführt sein. Anstelle des gezeigten Mischgewebes kann es auch zweckmäßig sein, das Gewebe 8 vollständig aus elektrisch leitenden Fäden 7 auszubilden.

Fig. 6 zeigt eine Variante der Potentialausgleichseinrichtung 6 nach Fig. 5, bei der anstelle des flexiblen Gewebes 8 eine flexible Anordnung aus einem Stützgewebe 25 mit einer darauf aufgebrachten Folie 26 vorgesehen ist. Zur Bildung der Potentialausgleichseinrichtung 6 ist die Folie 26 mit einer elektrisch leitenden, folienartigen Beschichtung 14 versehen. Das gezeigte dreischichtige Material mit dem Stützgewebe 25, der Folie 26 und der Beschichtung 14 ist als Werkstoff zur Bildung des Fangsackes 4 (Fig. 2) vorgesehen, wobei die folienartige Beschichtung 14 auf der Innenseite des Fangsackes 4 zu liegen kommt. Es kann auch zweckmäßig sein, den Fangsack 4 aus einem anderen Material aufzubauen, wobei innenseitig des Fangsackes 4 eine Einlage aus einem Material beispielsweise nach den Fig. 5 und 6 angeordnet ist.

Anstelle der gezeigten flexiblen Ausbildung der Potentialausgleichseinrichtung 6 nach den Fig. 5 und 6 kann auch eine starre Anordnung beispielsweise in Form eines Drahtgebildes, eines Blechstreifens oder dgl. vorteilhaft sein.

Das gezeigte Saug-/Blasgerät kann vorteilhaft auch derart ausgebildet sein, daß im Blasrohr 3 eine Venturieinrichtung o. ä. angeordnet ist, in die ein Saugrohr mündet. Durch den Unterdruck in der Venturieinrichtung entsteht im Saugrohr ein Saugluftstrom, mittels dessen Nüsse, Oliven oder anderes Erntegut sowie anderes, auch gröberes Material vom Boden aufgesammelt und in den Fangsack 4 geleitet werden kann. Außer durch den Tragluftstrom im Blasrohr 3 entstehen auch durch den Saugluftstrom im Saugrohr elektrische Potentialdifferenzen, die durch die Potentialausgleichseinrichtung 6 zuverlässig ausgeglichen werden.

## Patentansprüche

1. Handgeführtes, tragbares Saug-/Blasgerät mit einem Gebläse (1), mit einem Motor (2) zum Antrieb des Gebläses (1) und mit einem vom Gebläse fortführenden Blasrohr (3), welches im Saugbetrieb des Saug-/Blasgerätes in einen Fangsack (4) mündet,
**dadurch gekennzeichnet, daß** innenseitig des Fangsackes (4) eine mit einer elektrischen Masse (5) des Saug-/Blasgerätes elektrisch leitend verbundene Potentialausgleichseinrichtung (6) angeordnet ist.

2. Gerät nach Anspruch 1,
**dadurch gekennzeichnet, daß** die Potentialausgleichseinrichtung (6) flexibel ausgebildet ist.

3. Gerät nach Anspruch 2,
**dadurch gekennzeichnet, daß** die Potentialausgleichseinrichtung (6) als Anordnung elektrisch leitender, insbesondere metallischer Fäden (7) ausgeführt ist.

4. Gerät nach Anspruch 3,
**dadurch gekennzeichnet, daß** der Fangsack (4) aus einem die elektrisch leitenden Fäden (7) umfassendes Gewebe (8) gefertigt ist.

5. Gerät nach Anspruch 1 oder 2,
**dadurch gekennzeichnet, daß** die Potentialausgleichseinrichtung (6) als elektrisch leitende, folienartige Beschichtung (14) des Fangsackes (4) ausgebildet ist.

6. Gerät nach einem der Ansprüche 1 bis 5,
**dadurch gekennzeichnet, daß** die elektrische Masse (5) des Saug-/Blasgerätes durch den Motor (2) und insbesondere durch ein Gehäuse (9) des Motors (2) gebildet ist.

7. Gerät nach Anspruch 6,
**dadurch gekennzeichnet, daß** ein Potentialausgleichsleiter (10) von der Potentialausgleichseinrichtung (6) zu dem Gehäuse (9) des Motors (2) innenseitig durch einen Ausblaskrümmer (11) des Gebläses (1) verläuft, wobei ein motornahes Ende (19) des Potentialausgleichsleiters (10) innenseitig des Gebläses (1) im Bereich des Ausblaskrümmers (11) insbesondere mit einer Motorbefestigungsschraube (12) am Motor (2) befestigt ist.

8. Gerät nach einem der Ansprüche 1 bis 7,
**dadurch gekennzeichnet, daß** die Potentialausgleichseinrichtung (6) mit einer weiteren Potentialausgleichseinrichtung (13) im Blasrohr (3) elektrisch leitend verbunden ist.
